# EUROPÄISCHE PATENTSCHRIFT

(11) **EP 1 789 356 B1**
(45) Veröffentlichungstag und Bekanntmachung des Hinweises auf die Patenterteilung: **17.02.2010**
(21) Anmeldenummer: 05775394.9
(22) Anmeldetag: 07.09.2005
(51) Int. Cl.: B66B 7/08, F16G 11/04

(54) **RIEMENENDVERBINDUNG ZUR BEFESTIGUNG EINES ENDES EINES TRAGRIEMENS IN EINER AUFZUGSANLAGE UND VERFAHREN ZUR BEFESTIGUNG EINES ENDES EINES TRAGRIEMENS IN EINER AUFZUGSANLAGE**
CABLE END CONNECTION FOR FASTENING THE END OF A SUPPORTING CABLE IN AN ELEVATOR SYSTEM AND METHOD FOR FASTENING THE END OF A SUPPORTING CABLE IN AN ELEVATOR SYSTEM
RACCORDEMENT D'EXTREMITE DE CABLE POUR LA FIXATION DE L'EXTREMITE D'UN CABLE DE SUPPORT DANS UN SYSTEME D'ASCENSEUR ET PROCEDE DE FIXATION DE L'EXTREMITE D'UN CABLE DE SUPPORT DANS UN SYSTEME D'ASCENSEUR

(30) Priorität: 13.09.2004 EP 04021671
(43) Veröffentlichungstag der Anmeldung: 30.05.2007
(73) Patentinhaber: Inventio AG, 6052 Hergiswil (CH)
(72) Erfinder: ACH, Ernst, 6030 Ebikon (CH)
(74) Vertreter: Blöchle, Hans
(86) Internationale Anmeldenummer: PCT/CH2005/000532
(87) Internationale Veröffentlichungsnummer: WO 2006/029544

(56) Entgegenhaltungen:
- EP-A- 1 252 086
- US-A1- 2002 042 973
- US-A1- 2002 154 944

## Beschreibung

Die vorliegende Erfindung bezieht sich auf eine Riemenendverbindung zur Befestigung eines Endes eines Tragriemens in einer Aufzugsanlage und ein Verfahren zur Befestigung eines Endes eines Tragriemens in einer Aufzugsanlage.

Eine Aufzugsanlage besteht in der Regel aus einer Kabine und einem Gegengewicht, welche gegenläufig in einem Aufzugsschacht bewegt werden. Kabine und Gegengewicht sind mittels Tragriemen miteinander verbunden und getragen. Ein Ende des Tragriemens ist dabei mit einer Riemenendverbindung an der Kabine, bzw. am Gegengewicht oder im Aufzugsschacht befestigt. Der Ort der Befestigung richtet sich nach der Ausführungsart der Aufzugsanlage.

Die Riemenendverbindung muss dementsprechend die im Tragriemen wirkende Kraft zu der Kabine, bzw. dem Gegengewicht oder zu dem Aufzugsschacht übertragen. Sie muss derart ausgelegt sein, dass sie eine erforderliche Tragkraft des Tragriemens sicher übertragen kann.

Soll die Aufzugsanlage auch einem Brandfall im Gebäude widerstehen muss die Riemenendverbindung auch erhöhte Temperaturen ertragen.

Bei bekannten Ausführungen wird der Tragriemen mittels eines Keils in einer Keiltasche festgehalten. Eine erste Keiltaschenfläche der Keiltasche ist hierbei entsprechend einer Zugrichtung des Tragriemens ausgeführt. Diese erste Keiltaschenfläche ist in der Abzugsrichtung des Tragriemens angeordnet. Eine zweite Keiltaschenfläche der Keiltasche ist entsprechend einem Keilwinkel des Keiles zur ersten Keiltaschenfläche verschoben ausgeführt. Der Tragriemen wird nun zwischen Keiltaschenflächen und Keil angeordnet und er zieht den Keil aufgrund der Reibungsverhältnisse in die Keiltasche, wodurch der Tragriemen festgehalten wird. Naturgemäss gleitet somit der tragende Trumm des Tragriemens, während die Tragkraft aufgebaut wird, entlang der ersten Keiltaschenfläche, währenddem der lose Trumm des Tragriemens in seiner Lage zur zweiten Keiltaschenfläche nur eine geringe Dehnbewegung erfährt. Im Folgenden wird die erste Keiltaschenfläche Keiltaschen-Gleitfläche genannt und die zweite Keiltaschenfläche wird Keiltaschen-Haftfläche genannt.

Aus EP 1252086 ist eine derartige Riemenendverbindung bekannt bei der die Keiltasche derart ausgeführt ist, dass der Keil in einem Bereich stark gepresst wird, wodurch die Pressung auf den Tragriemen ungleichmässig, Idealerweise auf der Keiltaschen-Gleitfläche nach oben - zu der von der Einlaufstelle des Tragriemens abgewandten Seite - zunehmend, erfolgt.

Ein Nachteil dieser Ausführung ist, dass der Tragriemen im Bereiche der erhöhten Pressung einer sehr starken punktuellen Belastung ausgesetzt ist, was sich nachteilig auf die Lebensdauer des Tragmittels auswirken kann.

Aufgaben der vorliegenden Erfindung ist es dementsprechend eine Riemenendverbindung bereitzustellen die:
- keine starken punktuellen Belastungen aufweist,
- die zulässige Tragkraft des Tragriemens sicher überträgt,
- im Bedarfsfalle auch erhöhten Umgebungstemperaturen widersteht,
- montagefreundlich und kostengünstig ist.

Diese Aufgaben werden durch die Erfindung gemäss der Definition der Patentansprüche gelöst.

Die Erfindung betrifft eine Riemenendverbindung zur Befestigung eines Riemenendes in einer Aufzugsanlage und ein Verfahren zur Befestigung eines Tragriemens in einer Aufzugsanlage gemäss der Definition der Patentansprüche.

Die Aufzugsanlage besteht aus einer Kabine und einem Gegengewicht, welche gegenläufig in einem Aufzugsschacht bewegt werden. Kabine und Gegengewicht sind mittels Tragriemen miteinander verbunden und getragen. Ein Ende des Tragriemens ist mit einer Riemenendverbindung an der Kabine, bzw. Gegengewicht oder im Aufzugsschacht befestigt. Der Ort der Befestigung richtet sich nach der Ausführungsart der Aufzugsanlage. Der Tragriemen ist in der Riemenendverbindung mittels eines Keils, welcher den Tragriemen in einer Keiltasche fixiert, gehalten. Der die Keiltasche beinhaltende Teil der Riemenendverbindung wird durch ein Keilgehäuse gebildet. Der Tragriemen weist an seinem unbelasteten Ende einen losen Trumm auf. Dieser lose Trumm läuft auf die zur vertikalen Richtung geneigte Keiltaschen-Haftfläche auf und wird dort vom Keil, mittels seiner Keil-Klemmfläche, auf die Keiltaschen-Haftfläche gepresst. Der Tragriemen ist nun um einen Keil-Bogen geführt und verläuft zwischen einer gegenseitigen Keil-Klemmfläche und der Keiltaschen-Gleitfläche, welche im wesentlichen vertikal, bzw. in Zugrichtung des Tragriemens ausgerichtet ist, zum tragenden Trumm des Tragriemens. Die Zugkraft des Tragriemens wird somit durch die Pressung entlang der Keiltaschenflächen und die Umschlingung des Keiles aufgebracht. Die ertragbare Zugkraft des Tragriemens wird dabei massgeblich von der Oberflächenbeschaffung der sich berührenden Flächen beeinflusst. Eine Möglichkeit diese Oberflächenbeschaffung zu beschreiben ist die Rauheit der Oberfläche. Die Rautiefe ist dabei ein Mass für die Gestaltabweichung einer wirklichen Oberfläche von einer geometrisch-idealen Oberflächengestalt wie es in der DIN4762 umschrieben ist. Eine grosse Rautiefe bedeutet dabei eine raue Oberfläche - wodurch auch der Reibungskoeffizient erhöht wird -, eine kleine Rautiefe bedeutet eine glatte Oberfläche - was in der Regel einem kleinen Reibungskoeffizient entspricht -. Zur Angabe der Rauheit wird unter anderem ein arithmetischer Mittenrauwert Ra verwendet. Die Rauheit kann messtechnisch ermittelt werden, vielfach wird jedoch eine Bestimmung der Rauheit anhand von Vergleichsmustern vorgenommen.

Erfindungsgemäss ist mindestens eine dem Keil zugewandte Fläche der Keiltasche mit einer gegenüber der restlichen Oberfläche der Keiltasche, bzw. des Keilgehäuses unterschiedlichen Rautiefe versehen.

Der Vorteil dieser Erfindung ist darin zu sehen, dass die Reibkraft, die vom Keilgehäuse auf den Tragriemen übertragen werden kann, erhöht wird und, dass die Belastung des Tragriemens reduziert wird. Damit kann eine kostengünstige Riemenendverbindung bereitgestellt werden.

Weitere Vorteilhafte Ausführungen sind in den abhängigen Ansprüchen beschrieben.

In einer besonders vorteilhaften Ausgestaltung ist eine einem losen Trumm des Tragriemens näher liegende Keiltaschen-Haftfläche mit einer gegenüber der restlichen Oberfläche der Keiltasche erhöhten Rautiefe versehen, oder eine einem tragenden Trumm des Tragriemens näher liegende Keiltaschen-Gleitfläche ist mit einer gegenüber der restlichen Oberfläche der Keiltasche verminderten Rautiefe versehen.

Dies ist besonders Vorteilhaft, da bei Belastung des Tragriemens die durch das Einziehen des Keiles entstehende Presskraft des Keiles auf die Keiltasche in besonderem Masse die mögliche Tragkraft im Tragriemen auf der Seite der Keiltaschen-Haftfläche erhöht - da diese Fläche eine erhöhte Rauheit aufweist -, wodurch sich die max. mögliche Tragriemenkraft, als Folge der Umlenkung um den Keil, erhöht, ohne dass dabei die Pressung des Tragriemens zu hoch wird. Die Kraft wird dabei kontinuierlich erhöht, da die Krafterhöhung auf der Seite des losen Trumms aufgebaut wird. Dadurch werden keine hohen punktuelle Pressungen oder Lastsprünge erzeugt, es kann eine hohe Tragkraft übertragen werden. Zudem ist die Keiltaschenfläche, auf welcher der Tragriemen beim Belastungsvorgang gleitet, mit geringer Rauheit ausgeführt, was einer Beschädigung des Tragriemens entgegenwirkt, da dessen Oberfläche nicht verletzt wird. Mittels dieser Erfindung kann eine kostengünstige Riemenendverbindung mit hoher Traglast bereitgestellt werden.

Im Folgenden wird die Erfindung anhand beispielhafter Ausführungsformen gemäss den **Fig. 1 bis 9** im Detail erläutert. Hierbei zeigen:
- **Fig. 1:**: eine Aufzugsanlage, mit Unterschlingung, mit im Aufzugsschacht befestig- ter Riemenendbefestigung.
- **Fig. 2:**: eine Aufzugsanlage, direkt aufgehängt, mit an einer Kabine, bzw. einem Gegengewicht befestigter Riemenendbefestigung.
- **Fig. 3:**: eine Riemenbefestigung, an einer Kabine bzw. an einem Gegengewicht befestigt, mit nach oben wirkender Tragriemenkraft.
- **Fig. 4:**: eine Riemenbefestigung, an einem Aufzugsschacht befestigt mit nach unten wirkender Tragriemenkraft.
- **Fig. 5:**: Detailschnittbild einer Riemenendbefestigung.
- **Fig. 5a:**: schematische Querschnittdarstellung eines Tragriemens bestehend aus einem ummantelten Doppelseil.
- **Fig. 5b:**: schematische Querschnittdarstellung eines Tragriemens bestehend aus mehreren ummantelten Seillitzen.
- **Fig. 6:**: Ausführungsbeispiel eines Keiles mit glatter Oberfläche.
- **Fig. 7:**: Ausführungsbeispiel eines Keiles mit Längsrillen (Front- und Seitenan- sicht).
- **Fig. 8:**: Darstellung eines Keiles mit Längsrillen mit geklemmten Zuglitzen.
- **Fig. 9:**: Ausführungsbeispiel eines Keiles mit Querrillen (mit vergrössertem Detail).

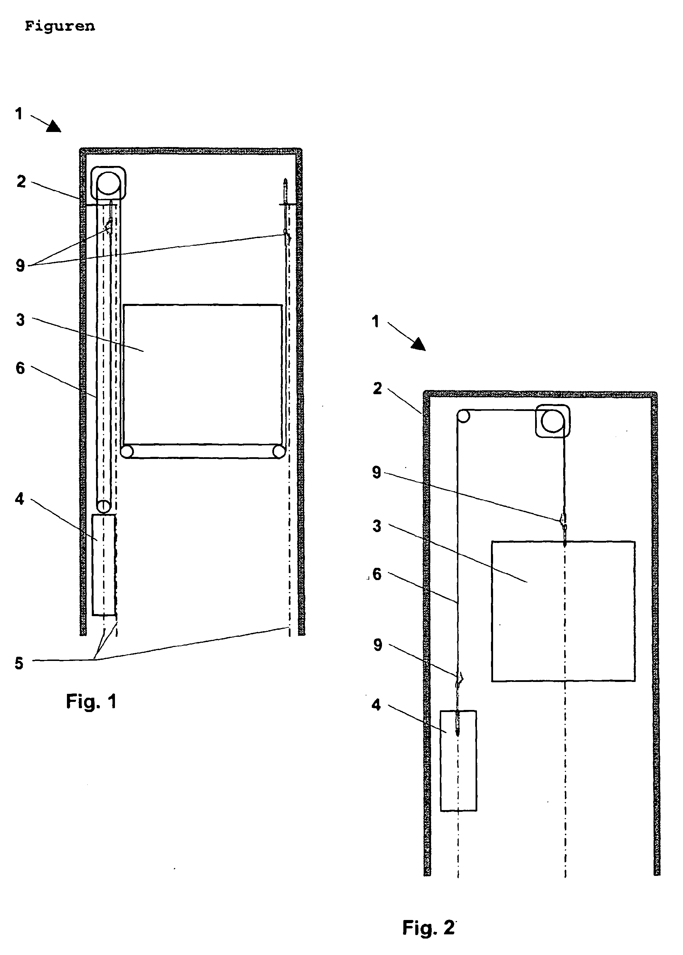

Die Aufzugsanlage 1 besteht, wie in den Fig. 1 und 2 dargestellt aus einer Kabine 3 und einem Gegengewicht 4, welche gegenläufig in einem Aufzugsschacht 2 bewegt werden. Kabine 3 und Gegengewicht 4 sind mittels Tragriemen 6 miteinander verbunden und getragen. Ein Ende des Tragriemens 6 ist mit einer Riemenendverbindung 9 an der Kabine 3, bzw. Gegengewicht 4, gemäss Fig. 2, oder im Aufzugsschacht 2, gemäss Fig. 1, befestigt. Der Ort der Befestigung richtet sich nach der Ausführungsart der Aufzugsanlage 1.

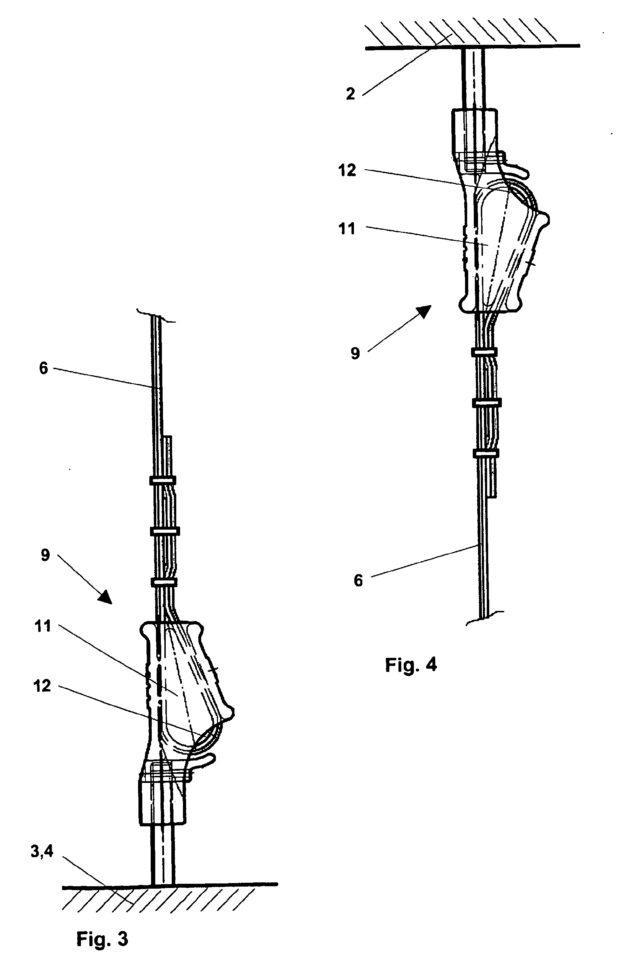

In den Fig. 3 und 4 und 5 ist ersichtlich wie der Tragriemen 6 in der Riemenendverbindung 9 mittels eines Keils 12, welcher den Tragriemen in einer Keiltasche 11 fixiert, gehalten wird.

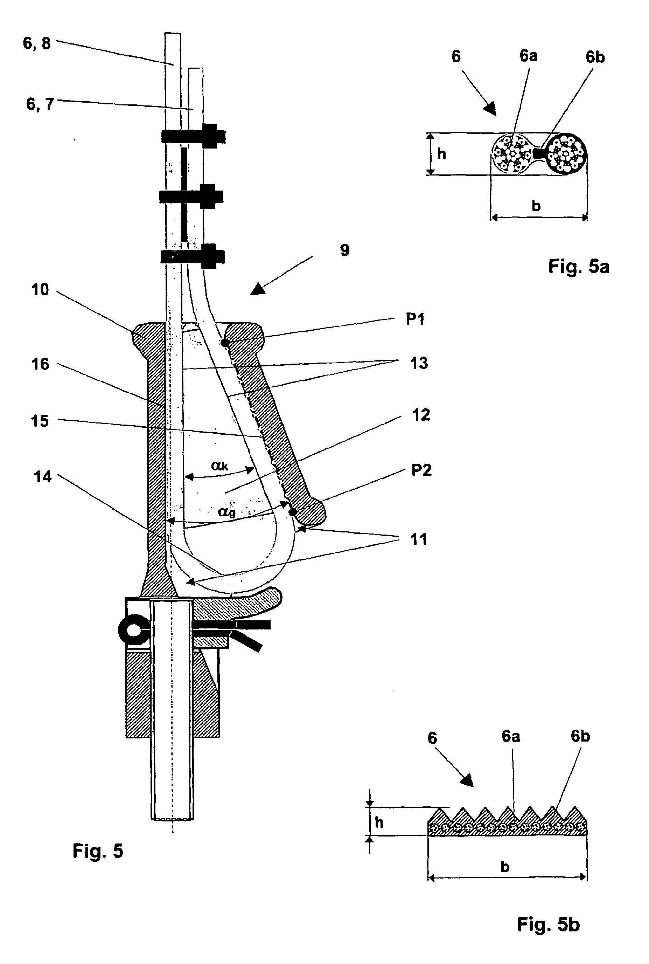

Der den Keil 12 beinhaltende Teil der Riemenendverbindung 9 wird durch ein Keilgehäuse 10 gebildet. Der Tragriemen 6 weist, wie in Fig. 5 dargestellt, an seinem unbelasteten Ende einen losen Trumm 7 auf. Dieser lose Trumm 7 läuft auf eine zur vertikalen Richtung geneigte Keiltaschen-Haftfläche 15 auf und wird dort vom Keil 12, mittels seiner Keil-Klemmfläche 13, auf die Keiltaschen-Haftfläche 15 gepresst. Der Tragriemen 6 ist nun um einen Keil-Bogen 14 geführt und verläuft zwischen der gegenseitigen Keil-Klemmfläche 13 und einer Keiltaschen-Gleitfläche 16, welche im Wesentlichen vertikal, bzw. in Zugrichtung des Tragriemens 6 ausgerichtet ist zum tragenden Trumm 8 des Tragriemens 6. Die Zugkraft des Tragriemens 6 wird somit im Wesentlichen durch die Pressung entlang der Keiltaschenflächen 15, 16 und die Umschlingung des Keiles aufgebracht. Beim Belastungsvorgang verbleibt der lose Trumm 7 bei seinem Einlaufpunkt P1 haften. Als Folge einer Dehnung des Tragriemens 6 ergibt sich in Richtung eines entgegen gesetzten Punktes P2 eine geringe relative Bewegung zur Keiltaschen-Haftfläche 15. Der Tragriemen 6 zieht den Keil 12 in die Keiltasche 11 hinein. Damit ergibt sich, dass der Tragriemen 6 entlang der Keiltaschen-Gleitfläche 16 gleitet.

Erfindungsgemäss ist nun mindestens eine dem Keil 12 zugewandte Fläche der Keiltasche 15, 16 mit einer gegenüber der restlichen Oberfläche der Keiltasche 11, bzw. des Keilgehäuses 10 unterschiedlichen Rautiefe versehen.

Der Vorteil dieser Erfindung ist darin zu sehen, dass die Reibkraft, die vom Keilgehäuse 10 auf den Tragriemen 6 übertragen werden kann, erhöht wird. Die Rautiefe der Keiltaschenfläche 15,16 kann entsprechend einem gewünschten Gleitverhalten des Tragriemens ausgeführt werden.

In einer besonders vorteilhaften Ausgestaltung ist die dem losen Trumm 7 des Tragriemens 6 näher liegende Keiltaschen-Haftfläche 15 mit einer gegenüber der restlichen Oberfläche der Keiltasche 11 erhöhten Rautiefe versehen oder die dem tragenden Trumm 8 des Tragriemens 6 näher liegende Keiltaschen-Gleitfläche 16 ist mit einer gegenüber der restlichen Oberfläche der Keiltasche 11 verminderten Rautiefe versehen.

Dies ist besonders Vorteilhaft, da bei Belastung des Tragriemens 6, die durch das Einziehen des Keiles 12 entstehende Presskraft des Keiles 12 auf die Keiltasche 11 in besonderem Masse die mögliche Tragkraft im Tragriemen 6 auf der Seite der Keiltaschen-Haftfläche 15 erhöht, wodurch sich die max. mögliche Tragriemenkraft, als Folge der Umschlingung des Keiles 12 deutlich erhöht, ohne dass dabei die Pressung des Tragriemens 6 zu hoch wird. Die Kraft wird dabei kontinuierlich erhöht, da die Krafterhöhung auf der Seite des losen Trumms 7 aufgebaut wird. Dadurch werden keine hohen punktuellen Pressungen oder Lastsprünge erzeugt, es kann eine hohe Tragkraft übertragen werden und die Riemenendverbindung 9 kann kostengünstig und montagefreundlich ausgeführt sein.

In einem ausgeführten Beispiel ist die in Fig. 5 ersichtliche, Keiltaschen-Haftfläche 15 mit einer mittleren Rautiefe Ra von mehr als 25µm (Mikrometer) hergestellt. Diese Oberflächenqualität wird beispielsweise erreicht, indem bei einer Herstellung des Keilgehäuses 10 mittels giessen ein grobkörniges Sandpapier in die Gussform eingelegt wird. Die dadurch entstehende grobkörnige Oberfläche weist eine mittlere Rautiefe Ra auf die im Bereiche von 25µm bis 75µm liegt. Heutige übliche Gussqualitäten weisen bei der Verwendung eines hochwertigen Sphäroguss, eine gemittelte Oberflächenrautiefe von 5µm bis 20µm auf.

Idealerweise beträgt die Differenz der mittleren Rautiefe Ra der Keiltaschen-Haftfläche zu der mittleren Rautiefe Ra der Keiltaschen-Gleitfläche mindestens 10µm. Die mittlere Rautiefe Ra der Keiltaschenfläche mit der geringeren Rautiefe ist somit um mehr als 30% kleiner als die mittlere Rautiefe Ra der Keiltaschenfläche mit der grösseren Rautiefe.

Bei der Verwendung eines Keilgehäuses 10 aus Stahlblech kann eine gewünschte Oberflächenrautiefe beispielsweise durch Prägen erreicht werden.

Der Vorteil dieser Ausführung ist, dass günstige Herstellmethoden gewählt werden können, und damit die Riemenendverbindung kostengünstig ausgeführt werden kann. Die Riemenendverbindung 9 enthält zudem wenige Teile und ist sehr montagefreundlich ausführbar.

Ein Keilwinkel des Keiles (αk) wird entsprechend einem Gehäusewinkel (αg) der Keiltasche ausgeführt. Erfahrungsgemäss ist der Keilwinkel des Keiles (αk) geringfügig grösser als der Gehäusewinkel (αg). Damit wird eine in Richtung des Einlaufes des Tragseiles abnehmende Pressung erzielt was eine deutliche Schonung des Tragriemens bewirkt und die Schwingbeständigkeit erhöht. In einem ausgeführten Beispiel ist der Keilwinkel (αk) um 2° grösser ausgeführt als der Gehäusewinkel (αg), wobei der Gehäusewinkel (αg) 20° beträgt.

Vielfach weisen heutige Tragriemen 6 eine geformte Oberfläche auf. Diese geformte Oberfläche, bzw. diese Kontur kann beispielsweise quergezahnt, wie ein Zahnriemen, sie kann längsgerillt, wie ein Keilrippenriemen oder genoppt sein. Der Tragriemen 6 kann dabei symmetrisch oder asymmetrisch, beispielsweise auf einer Seite glatt und auf der anderen Seite gerillt, sein. In einer Alternative der Riemenendverbindung, ist die Keiltaschen-Haftfläche 15 entsprechend einer Kontur des Tragriemens geformt.

Dabei ist vorteilhaft, dass die Kraftübertragung vom Tragriemen 6 zur Riemenendverbindung 9 optimiert wird.

Weitere vorteilhafte Eigenschaften lassen sich durch die Ausführung der Keil-Klemmflächen 13 und des Keil-Bogens 14 des Keiles 12 erreichen.

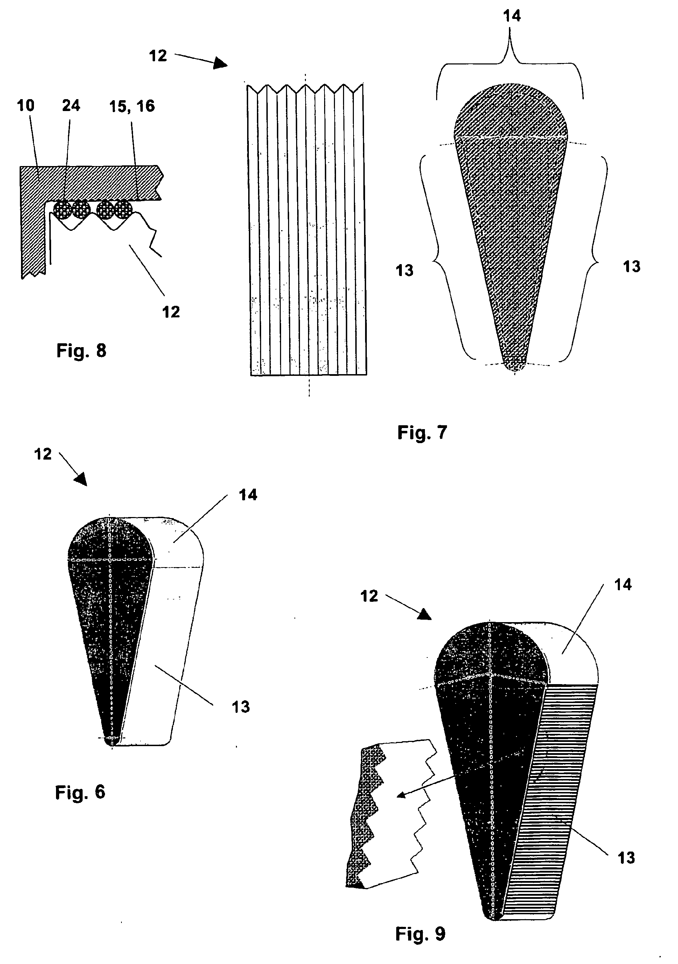

In einer ersten Keilvariante kann die Oberfläche des Keiles 12, wie in Fig. 6 dargestellt im Wesentlichen glatt sein. Diese Alternative ist besonders kostengünstig herstellbar.

Eine zweite Keilvariante sieht vor, dass die Keil-Klemmflächen 13 des Keiles 12, wie in Fig. 9 erkennbar, mit Querrillen (gerändelt) ausgeführt sind. Idealerweise ist dabei der Keil-Bogen 14 zur Fertigungsvereinfachung glatt ausgeführt. Mit dieser Keilvariante wird im Besonderen die Beständigkeit gegen erhöhte Umgebungstemperaturen deutlich gesteigert. So lassen sich im Versuch, selbst bei schmelzender Ummantelung des Tragriemens 6 - wie es beispielsweise bei einem Brandfall auftreten kann - Traglasten erreichen welche 80% der Mindestbruchkraft des Tragriemens übersteigen. Auch die Schwingbeständigkeit der Riemenendverbindung ist verbessert. Dies wird erreicht, da tragende Zuglitzen des Tragriemens 6 durch die Querrillen geklemmt werden. Die Ausführung mit glattem Keil-Bogen 14 schont zudem den Tragriemen 6, da er im Bereiche der starken Umlenkung ganz auf dem Keil-Bogen 14 aufliegt.

Bei einer dritten Keilvariante sind die Keil-Klemmflächen 13 und der Keil-Bogen 14 mit Längsrillen versehen wie in der Fig. 7 ersichtlich oder sie sind entsprechend der Kontur des Tragriemens ausgeführt. Diese Variante ist vorteilhafterweise nur zur Verwendung mit einen entsprechend geformten Tragriemen 6 angewendet. So wird bei einem längsgerillten Keil ein Keilrippenriemen verwendet und der Keilrippenriemen wird dabei mit der gerillten Oberfläche um den Keil gelegt. Die Längsrillen - oder die entsprechende Kontur - bewirken eine ideale Übertragung der Tragriemen-Kraft und sie erhöhen ebenfalls die Temperaturbeständigkeit sowie Schwingungsbeständigkeit der Riemenendverbindung. Auch bei geschmolzener Ummantelung des Tragriemens - was als Folge eines Brandes im Gebäude auftreten kann - werden tragende Zuglitzen 24, 6a, des Tragmittels 6 verklemmt wie in Fig. 8 ersichtlich.

In einer Vorteilhaften Ausführung ist der Keil 12 aus einem, im Verhältnis zum Keilgehäuse 10, weichen Werkstoff hergestellt. Besonders bewährt hat sich dabei Aluminium. Aluminium weist einen Elastizitätsmodul auf der in etwa einem Drittel (1/3) des Elastizitätsmoduls von Stahl entspricht. Dieser "weiche" Keil gewährleistet eine schonende Klemmung des Tragriemens und beugt damit Beschädigungen vor.

In einer besonderen Ausführungsvariante ist die Fläche der Keiltasche 15,16 mit unterschiedlicher Rautiefe mittels einer Einlegeplatte ausgeführt. Dies erlaubt eine modulare Bauweise einer Riemenendverbindung, da das Keilgehäuse 10 mit verschiedenen Einlegeplatten kombiniert werden kann.

Fig. 5a, 5b zeigen schematische Querschnitte durch beispielhafte Tragriemen 6. Der Tragriemen 6 ist gemäss den Trag- und Treibfähigkeitsanforderungen hergestellt. Er besteht in der Regel aus mindestens zwei, bzw. mehreren in einem Abstand zueinander angeordneten Seillitzen 6a, 24 und einem Mantel 6b, der die Seillitzen 6a voneinander trennt und umschliesst. In einer anderen Variante besteht der Tragriemen 6 aus zwei oder mehreren in einem Abstand zueinander angeordneten Seilen 6a und einem Mantel 6b, welcher die einzelnen Seile 6a voneinander trennt und umschliesst. Als Mantelmaterial sind im wesentlichen Thermoplaste oder Elastomere verwendet. Eine Breite b des entsprechenden Tragriemens 6 entspricht mindestens einer zweifachen Höhe h des Riemens. Der Mantel 6b des Tragriemens weist eine Funktionsgerechte Formgebung auf. Er ist beispielsweise, wie in Fig. 5a dargestellt, entsprechend der Seilform ausgeprägt, wodurch sich Längsrillen ergeben oder er weist, wie in Fig. 5b ersichtlich, eine Funktionsoberfläche in der Form von Längs- oder Querrillen auf. Der Mantel 6b ist dazu ausgelegt die zum Antreiben eines Aufzuges erforderlichen Treibkräfte von einer Treibscheibe in die tragenden Seile oder Seillitzen 6a zu übertragen und er muss im wesentlichen innerhalb der Riemenendverbindung 9 eine im Tragriemen 6 wirkende Tragkraft von den Seilen oder den Seillitzen 6a zur Riemenendverbindung 9 übertragen. Das Seil oder die Seillitzen 6a bestehen vorzugsweise aus metallischem Werkstoff wie z.B. Stahl oder sie bestehen aus Kunststofffasern.

Bei Kenntnis der vorliegenden Erfindung kann der Aufzugsfachmann die gesetzten Formen und Anordnungen beliebig verändern. So kann er beispielsweise die Riemenendverbindung auch in einer horizontalen Einbaulage verwenden.

## Patentansprüche

1. Riemenendverbindung zur Befestigung eines Endes eines Tragriemens in einer Aufzugsanlage, wobei der Tragriemen (6) mittels eines Keiles (12) in einer Keiltasche (11) gehalten ist **dadurch gekennzeichnet, dass** mindestens eine dem Keil (12) zugewandte Keiltaschenfläche (15, 16) mit einer gegenüber der restlichen Oberfläche der Keiltasche (11) unterschiedlichen Rautiefe versehen ist.

2. Riemenendverbindung gemäss Anspruch 1 **dadurch gekennzeichnet, dass** eine dem losen Trumm (7) des Tragriemens (6) näher liegende Keiltaschen-Haftfläche (15) mit einer gegenüber der restlichen Oberfläche der Keiltasche (11) erhöhten Rautiefe versehen ist oder, dass eine dem tragenden Trumm (8) des Tragriemens (6) näher liegende Keiltaschen-Gleitfläche (16) mit einer gegenüber der restlichen Oberfläche der Keiltasche (11) verminderten Rautiefe versehen ist.

3. Riemenendverbindung gemäss einem der vorgängigen Ansprüche **dadurch gekennzeichnet, dass**
die Oberfläche der Keiltasche (11) mit erhöhter Rautiefe eine mittlere Rautiefe Ra von mehr als 25µm (Mikrometer) aufweist und die Oberfläche der Keiltasche (11) mit verminderter Rautiefe eine mittlere Rautiefe von weniger als 20µm (Mikrometer) aufweist oder, dass die Differenz der mittleren Rautiefe Ra der Keiltaschen-Haftfläche (15) zu der mittleren Rautiefe Ra der Keiltaschen-Gleitfläche (16) mindestens 10µm beträgt.

4. Riemenendverbindung gemäss einem der vorgängigen Ansprüche **dadurch gekennzeichnet, dass**
die Keiltaschen-Haftfläche (15) entsprechend einer Kontur des Tragriemens (6) geformt ist.

5. Riemenendverbindung gemäss einem der vorgängigen Ansprüche **dadurch gekennzeichnet, dass**
die Oberfläche des Keiles (12) im wesentlichen glatt ist oder, dass ein Teil der Oberfläche des Keiles (12) der mit dem Tragriemen (6) in Berührung ist entsprechend der Kontur des Tragriemens (6) ausgeführt ist, oder dass
ein Teil der Oberfläche des Keiles (12) der mit dem Tragriemen (6) in Berührung ist quergerillt oder längsgerillt ausgeführt ist.

6. Riemenendverbindung gemäss einem der vorgängigen Ansprüche **dadurch gekennzeichnet, dass**
der Keil (12) aus Aluminium besteht.

7. Riemenendverbindung gemäss einem der vorgängigen Ansprüche **dadurch gekennzeichnet, dass**
die Keiltaschenfläche (15,16) mittels einer Einlegeplatte ausgeführt ist.

8. Riemenendverbindung gemäss einem der vorgängigen Ansprüche **dadurch gekennzeichnet, dass**
der Tragriemen (6) aus mindestens zwei in einem Abstand zueinander angeordneten Seilen oder Seillitzen (6a) und einem Mantel (6b), welcher die einzelnen Seile oder Seillitzen (6a) voneinander trennt und umschliesst, besteht, der Seilmantel (6b) aus Thermoplast oder einem Elastomer besteht und
eine Breite b des Tragriemens (6) mindestens einer zweifachen Höhe h des Tragriemens (6) entspricht.

9. Verfahren zur Befestigung eines Endes eines Tragriemens in einer Aufzugsanlage wobei der Tragriemen (6) mittels eines Keiles (12) in einer Keiltasche (11) gehalten wird **dadurch gekennzeichnet, dass**
mindestens eine dem Keil (12) zugewandte Keiltaschenfläche (15, 16) mit einer gegenüber der restlichen Oberfläche der Keiltasche (11) unterschiedlichen Rautiefe versehen wird.

## Claims

1. Belt end connection for fastening an end of a support belt in a lift installation, wherein the support belt (6) is held in a wedge pocket (11) by means of a wedge (12), **characterised in that** at least one wedge pocket surface (15, 16) facing the wedge (12) is provided with a roughness which is different by comparison with the remaining surface of the wedge pocket (11).

2. Belt end connection according to claim 1, **characterised in that** a wedge pocket adhesion surface (15) lying closer to the loose run (7) of the support belt (6) is provided with a roughness increased by comparison with the remaining surface of the wedge pocket (11) or that a wedge pocket slide surface (16) lying closer to the supporting run (8) of the support belt (6) is provided with a roughness reduced by comparison with the remaining surface of the wedge pocket (11).

3. Belt end connection according to any one of the preceding claims, **characterised in that** the surface of the wedge pocket (11) with increased roughness has a mean roughness Ra of more than 25 µm (micrometres) and the surface of the wedge pocket (11) with reduced roughness has a mean roughness of less than 20 µm (micrometres) or that the difference of the mean roughness Ra of the wedge pocket adhesion surface (15) from the mean roughness Ra of the wedge pocket slide surface (16) amounts to at least 10 µm.

4. Belt end connection according to any one of the preceding claims, **characterised in that** the wedge pocket adhesion surface (15) is shaped in correspondence with a contour of the support belt (6).

5. Belt end connection according to any one of the preceding claims, **characterised in that** the surface of the wedge (12) is substantially smooth or that a part of the surface of the wedge (12) in contact with the support belt (6) is constructed in correspondence with the contour of the support belt (6) or that a part of the surface of the wedge (12) in contact with the support belt (6) is constructed to be transversely grooved or longitudinally grooved.

6. Belt end connection according to any one of the preceding claims, **characterised in that** the wedge (12) consists of aluminium.

7. Belt end connection according to any one of the preceding claims, **characterised in that** the wedge pocket surface (15, 16) is realised by means of an insert plate.

8. Belt end connection according to any one of the preceding claims, **characterised in that** the support belt (6) consists of at least two cables or cable strands (6a), which are arranged at a spacing from one another, and a casing (6b), which separates the individual cables or cable strands (6a) from one another and encloses them, the cable casing (6b) consists of thermoplastic material or an elastomer and a width b of the support belt (6) corresponds with at least twice the height h of the support belt (6).

9. Method for fastening an end of a support belt in a lift installation, wherein the support belt (6) is held in a wedge pocket (11) by means of a wedge (12), **characterised in that** at least one wedge pocket surface (15, 16) facing the wedge (12) is provided with a roughness which is different by comparison with the remaining surface of the wedge pocket (11).

## Revendications

1. Liaison d'extrémité de câble pour fixer une extrémité d'un câble porteur dans une installation d'ascenseur, le câble porteur (6) étant maintenu à l'aide d'un coin (12) dans un manchon pour coin (11), **caractérisée en ce qu'**au moins une surface de manchon (15, 16) tournée vers le coin (12) est dotée d'une profondeur de rugosité différente par rapport au reste de la surface du manchon (11).

2. Liaison d'extrémité de câble selon la revendication 1, **caractérisée en ce qu'**une surface d'adhérence de manchon pour coin (15) plus proche du brin lâche (7) du câble porteur (6) est dotée d'une profondeur de rugosité accrue par rapport au reste de la surface du manchon pour coin (11), ou **en ce qu'**une surface de glissement de manchon pour coin (16) plus proche du brin porteur (8) du câble porteur (6) est dotée d'une profondeur de rugosité réduite par rapport au reste de la surface du manchon pour coin (11).

3. Liaison d'extrémité de câble selon l'une des revendications précédentes, **caractérisée en ce que** la surface du manchon pour coin (11) à profondeur de rugosité accrue présente une profondeur de rugosité moyenne Ra de plus de 25 µm (microns) tandis que la surface du manchon pour coin (11) à profondeur de rugosité réduite présente une profondeur de rugosité moyenne de moins de 20 µm (microns), ou **en ce que** la différence entre la profondeur de rugosité moyenne Ra de la surface d'adhérence de manchon pour coin (15) et la profondeur de rugosité moyenne Ra de la surface de glissement de manchon pour coin (16) est d'au moins 10 µm.

4. Liaison d'extrémité de câble selon l'une des revendications précédentes, **caractérisée en ce que** la surface d'adhérence de manchon pour coin (15) est formée suivant un contour du câble porteur (6).

5. Liaison d'extrémité de câble selon l'une des revendications précédentes, **caractérisée en ce que** la surface du coin (12) est globalement lisse, ou **en ce qu'**une partie de la surface du coin (12) qui est en contact avec le câble porteur (6) est réalisée suivant le contour du câble porteur (6), ou **en ce qu'**une partie de la surface du coin (12) qui est en contact avec le câble porteur (6) est réalisée avec des rainures transversales ou longitudinales.

6. Liaison d'extrémité de câble selon l'une des revendications précédentes, **caractérisée en ce que** le coin (12) est en aluminium.

7. Liaison d'extrémité de câble selon l'une des revendications précédentes, **caractérisée en ce que** la surface de manchon pour coin (15, 16) est réalisée à l'aide d'une plaque d'insertion.

8. Liaison d'extrémité de câble selon l'une des revendications précédentes, **caractérisée en ce que** le câble porteur (6) se compose d'au moins deux câbles ou torons de câble (6a) espacés l'un de l'autre et d'une gaine (6b) qui sépare et entoure les câbles ou torons individuels (6a), la gaine de câble (6b) est en thermoplastique ou en élastomère, et une largeur b du câble porteur (6) correspond au moins au double de la hauteur h du câble porteur (6).

9. Procédé pour fixer une extrémité d'un câble porteur dans une installation d'ascenseur, le câble porteur (6) étant maintenu à l'aide d'un coin (12) dans un manchon pour coin (11), **caractérisé en ce qu'**au moins une surface de manchon (15, 16) tournée vers le coin (12) est dotée d'une profondeur de rugosité différente par rapport au reste de la surface du manchon (11).
